# EUROPEAN PATENT APPLICATION

(11) **EP 4 175 138 A1**
(43) Date of publication of application: **03.05.2023**
(21) Application number: 21832008.3
(22) Date of filing: 28.06.2021
(51) Int. Cl.: H02K 15/02, H02K 1/27, H02K 1/22

(54) **METHOD FOR MANUFACTURING ROTOR CORE, ROTOR CORE, HIGH-STRENGTH STEEL SHEET, AND METHOD FOR MANUFACTURING HIGH-STRENGTH STEEL SHEET**

(30) Priority: 30.06.2020 JP 2020112817
(71) Applicant: Aichi Steel Corporation, Tokai-shi, Aichi 476-8666 (JP)
(72) Inventor: HAMADA, Norihiko, Tokai-shi, Aichi 476-8666 (JP)
(74) Representative: Kuhnen & Wacker Patent- und Rechtsanwaltsbüro PartG mbB
(86) International application number: PCT/JP2021/024399
(87) International publication number: WO 2022/004672

(57) **Abstract**

At least a part of a bridge portion of each electromagnetic steel sheet is modified, and electromagnetic steel sheets that have undergone the modification are stacked. This allows the bridge portions of a rotor core according to the present embodiment to have a lower magnetic permeability than that of other sites, and it is therefore possible to prevent some of the magnetic field lines from being short-circuited so as to draw a closed curve in the rotor core. Accordingly, a decrease in the efficiency of an interior permanent magnet (IPM) type rotating electric machine can be suppressed.

## Description

### [Cross Reference to Related Applications]

The present international application claims priority based on Japanese Patent Application No. 2020-112817 filed with the Japan Patent Office on June 30, 2020, the entire contents of which are incorporated by reference into the present international application.

### [Technical Field]

The present disclosure relates to a method for manufacturing an interior permanent magnet (IPM) type rotor core and relevant techniques.

### [Background Art]

The rotor core of a rotor for rotating electric machines is configured such that a large number of electromagnetic steel sheets are stacked in the thickness direction, for example, as described in Patent Document 1.

### [Prior Art Documents]

### [Patent Documents]

Patent Document 1: JP2011-6741A

### [Summary of Invention]

### [Technical Problem]

In an interior permanent magnet (IPM) type rotor, permanent magnets are embedded in the rotor core, and therefore some of the magnetic field lines are short-circuited so as to draw a closed curve in the rotor core and, for example, may not reach the stator. This will cause a reduced (apparent) permeance between the rotor and the stator, resulting in a decrease in the efficiency of a rotating electric machine such as an electric motor.

In view of the above points, the present disclosure discloses an example of a method for manufacturing a rotor core capable of suppressing a decrease in the efficiency of an interior permanent magnet (IPM) type rotating electric machine.

### [Solution to Problem]

A method for manufacturing a rotor core (1) is provided. In the rotor core (1), electromagnetic steel sheets (2) are stacked in the thickness direction and one or more permanent magnets are partially embedded. The method preferably includes, for example, performing modification to melt at least a part of a bridge portion (4) of each electromagnetic steel sheet (2) together with a modifying metal or modifying alloy to make a magnetic permeability of the part lower than that of other sites and stacking the electromagnetic steel sheets (2) that have undergone the modification.

This allows the bridge portions (4) of the rotor core (1) to have a lower magnetic permeability than that of other sites, and it is therefore possible to prevent some of the magnetic field lines from being short-circuited so as to draw a closed curve in the rotor core. Accordingly, a decrease in the efficiency of an interior permanent magnet (IPM) type rotating electric machine can be suppressed.

Bridge portions refer to sites of each electromagnetic steel sheet (also referred to as a core sheet) that are generally called "outer bridges" or "inner bridges (also referred to as "ribs"). The bridge portions refer, for example, to "sites of each electromagnetic steel sheet (2) that connect between an outer core located on the outer peripheral side of magnet holes (3) in which permanent magnets are embedded and an inner core located on the inner side of the magnet holes."

Each of the above reference numerals in parentheses is an example representing the correspondence relationship with a specific configuration or the like described in the embodiments, which will be described later, and the present disclosure is not limited to the specific configurations or the like represented by the above reference numerals in parentheses.

### [Brief Description of Drawings]

FIG. 1 is a front view of a rotor core according to a first embodiment.
FIG. 2 is a partially enlarged view of an electromagnetic steel sheet according to the first embodiment.
FIG. 3 is a process chart of a manufacturing method according to the first embodiment.
FIG. 4 is an explanatory diagram of a modifying step according to the first embodiment.
FIG. 5 is a diagram illustrating an example of a beam scanning scheme in the first embodiment.
FIG. 6 is an explanatory diagram of an insulating film forming step according to the first embodiment.
FIG. 7 is a process chart of a manufacturing method according to a second embodiment.
FIG. 8 is an explanatory diagram of a flattening step according to the second embodiment.
FIG. 9 is a process chart of a manufacturing method according to a third embodiment.
FIG. 10 is an explanatory diagram of a depression forming step according to the second embodiment.

### [Description of Reference Numerals]

- 1: Rotor core
- 2: Electromagnetic steel sheet
- 3: Magnet hole
- 4: Bridge portion

### [Embodiments for Carrying out the Invention]

The following "embodiments of the invention" each represent an example of an embodiment that belongs to the technical scope of the present disclosure. In other words, matters or the like specifying the invention recited in the scope of claims are not limited to the specific configurations, structures, etc. illustrated in the following embodiments.

Direction arrows, hatchings, etc. in the figures are illustrated to facilitate understanding of the relationship between figures and the shape of each member or site. Accordingly, the invention illustrated in the present disclosure is not limited by the directions in the figures. Figures with hatching may not necessarily be cross-sectional views.

The number of a member or members or a site or sites that are described at least with the reference numerals is at least one, unless otherwise stated as "one" or the like. In other words, two or more members may be provided unless otherwise stated as "one" or the like. The rotor core and other components illustrated in the present disclosure include constitutional elements, such as members or sites that are described at least with the reference numerals, and structural sites illustrated in the figures.

### (First Embodiment)

### <1. Overview of Rotor Core>

In the present embodiment, an example of the method for manufacturing a rotor core according to the present disclosure is applied to a method for manufacturing a rotor core used in an electric motor for traveling of an electric vehicle. A rotor core 1 according to the present embodiment is a rotor that rotates in a stator by electromagnetic force.

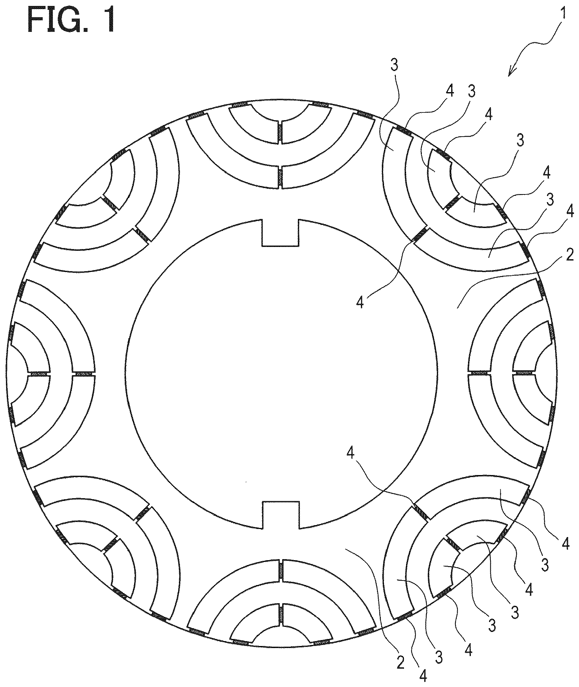

The rotor core 1 has a large number of electromagnetic steel sheets (also referred to as core sheets) 2 composed of silicon steel sheets illustrated in FIG. 1 and is configured such that these electromagnetic steel sheets 2 are stacked in the thickness direction. The thickness direction refers to the sheet thickness direction of each electromagnetic steel sheet 2 (in FIG. 1, the direction perpendicular to the plane of paper).

Permanent magnets (not illustrated) are embedded in the rotor core 1. To this end, each electromagnetic steel sheet 2 is provided with a plurality of magnet holes 3. Each magnet hole 3 is a through hole in which the permanent magnet is embedded. The type of permanent magnet embedded in each magnet hole 3 and the embedding scheme are not limited.

### <2. Method for Manufacturing Rotor Core>

### <2.1 Overview of Manufacturing Method>

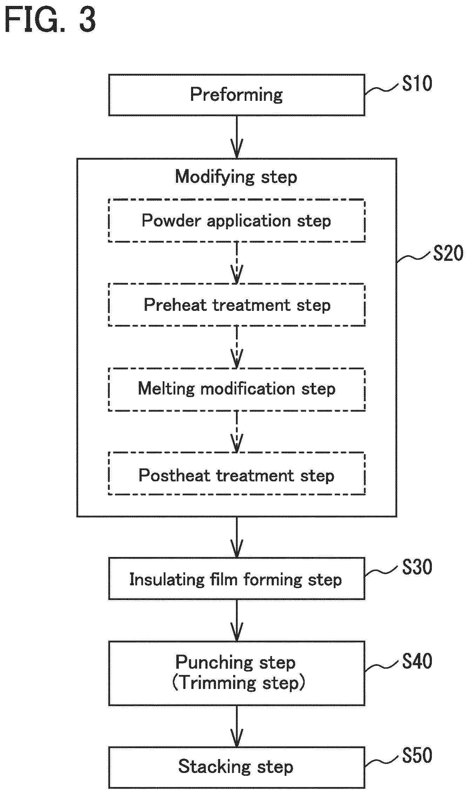

Manufacturing of the rotor core 1 is carried out, for example, in accordance with the process chart illustrated in FIG. 3. That is, first, an electromagnetic steel sheet to be material, which is wound in a roll, is formed (preforming step: S10) into a shape suitable for processing in the next step (S20).

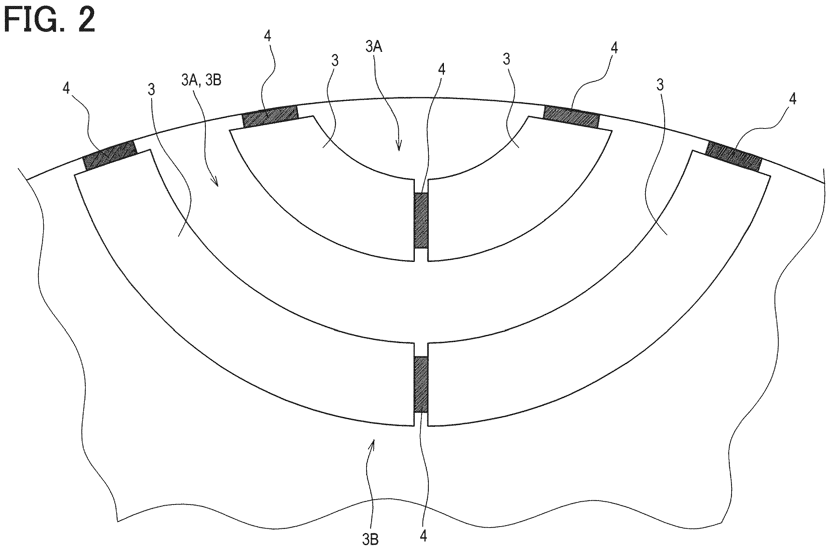

At least a part of a bridge portion 4 (see FIG. 2) of each preformed electromagnetic steel sheet 2 is modified (modifying step: S20). Modification refers to a process in which the part is melted together with a modifying metal or modifying alloy to make the magnetic permeability of the part lower than that of other sites.

Bridge portions 4 refer to sites of each electromagnetic steel sheet 2 that are generally called "outer bridges" or "inner bridges (also referred to as "ribs"). As illustrated in FIG. 2, the bridge portions 4 refer, for example, to "sites of each electromagnetic steel sheet 2 that connect between an outer core 3A located on the outer peripheral side of magnet holes 3 in which permanent magnets are embedded and an inner core 3B located on the inner side of the magnet holes 3."

Note that, in FIG. 2, four magnet holes 3 are arranged in two rows. Accordingly, in each electromagnetic steel sheet 2, a site between the outer row of magnet holes 3 and the inner row of magnet holes 3 serves as the outer core 3A for the inner row of magnet holes 3 and serves as the inner core 3B for the outer row of magnet holes 3.

As illustrated in FIG. 3, for each electromagnetic steel sheet 2 that has undergone the modifying step, an electrical insulating film is formed on at least a part of each bridge portion 4 (insulating film forming step: S30). After that, each electromagnetic steel sheet 2 is press-formed into a predetermined shape by punching with a press machine (punching step: S40).

The predetermined shape refers, for example, to a shape illustrated in FIG. 1. Specifically, the predetermined shape refers to a plurality of arc-shaped magnet holes 3, a circular outer peripheral shape, an inner shape into which a shaft is inserted, and a shape such as a key groove provided in the inner shape.

That is, the magnet holes 3 are not formed in a step (e.g., the modifying step) before the punching step, and are formed in the punching step. Likewise, the circular outer shape of each electromagnetic steel sheet 2, that is, of the core sheet, is also not formed.

A predetermined number of the electromagnetic steel sheets 2 that have undergone the punching step are stacked in the thickness direction (stacking step: S50). In the stacking step according to the present embodiment, recesses (not illustrated) and protrusions (not illustrated) formed on the electromagnetic steel sheets 2 are press-fitted and fixed to each other.

### <2.2 Details of Main Steps>

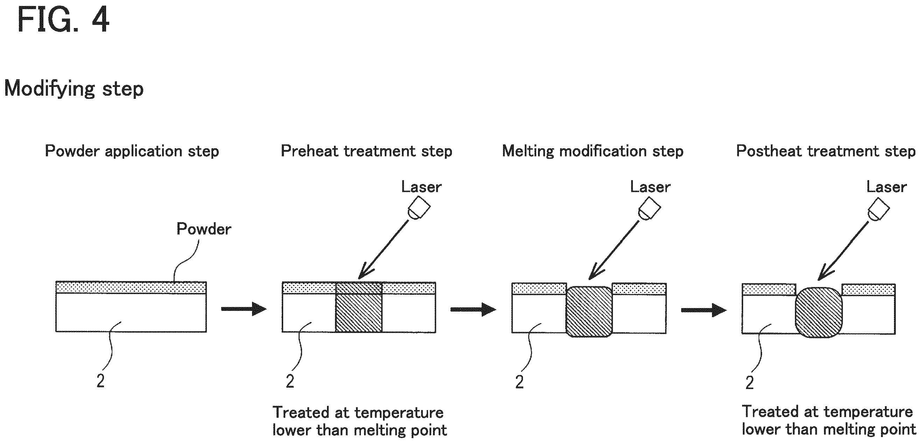

### <Modifying Step (see Fig. 4)>

The modifying step according to the present embodiment includes a powder application step, a preheat treatment step, a melting modification step, a postheat treatment step, etc. The powder application step is a step of applying a modifying metal or modifying alloy (such metal or alloy will be referred to as a modifier, hereinafter) to melting regions.

The melting regions refer to sites to be modified that each include at least a part of a bridge portion 4. Note that "at least a part of a bridge portion 4" means "a part of each of the plurality of bridge portions 4" rather than "any or some of the plurality of bridge portions 4."

Each bridge portion 4 and each melting region are a portion and a region that are determined appropriately by experiments, numerical simulations using a computer, or the like in accordance with the shape, size, required magnetic specs, etc. of the electromagnetic steel sheets 2.

In the modifying step, the magnet holes 3 have not yet been formed. The bridge portions 4 in the modifying step therefore refer to sites that will become the bridge portions 4 when the magnet holes 3 are formed in the subsequent steps.

In the present specification, a "bridge portion 4" refers to any bridge portion of the plurality of bridge portions 4. Likewise, a "magnet hole 3" refers to any magnet hole 3 of the plurality of magnet holes 3. That is, a bridge portion 4 and a magnet hole 3 as referred to in the present specification are not intended to mean a specific bridge portion 4 and a specific magnet hole 3.

The preheat treatment step is a heating step of heating at least the melting regions of the electromagnetic steel sheets 2, which have undergone the powder application step, to a predetermined temperature lower than the melting point of the electromagnetic steel sheets 2. The melting modification step is a step of heating the melting regions together with a modifier to perform modification.

In the melting modification step according to the present embodiment, the melting regions are melted by being irradiated with a beam such as a laser beam or an electron beam. In the following description, start regions each refer to a predetermined region that includes a site at which irradiation with the beam is started in a melting region, and the predetermined region is a site located outside a bridge portion 4.

On the other hand, end regions each refer to a predetermined region that includes a site at which irradiation with the beam is completed in a melting region, and the predetermined region is a site located outside a bridge portion 4. Thus, the start regions and the end regions are sites located outside the bridge portions 4.

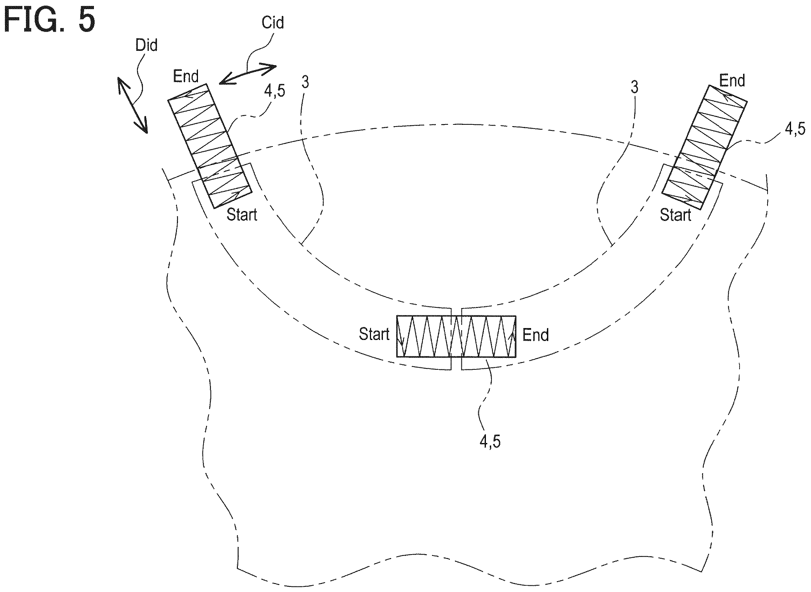

Fundamentally, the scanning direction of the beam is not limited. As illustrated in FIG. 5, for example, in a bridge portion 4 on the outer peripheral side (also referred to as an outer bridge) according to the present embodiment, the beam is scanned in a direction Did corresponding to the radial direction of the rotor core 1 while being scanned at high speed in a direction Cid corresponding to the circumferential direction of the rotor core 1. In FIG. 5, reference numeral 5 denotes the previously described melting region, that is, a region to be irradiated with the beam.

That is, in an outer bridge, the beam is scanned in the direction Did while oscillating at high speed in the direction Cid. Further, in the present embodiment, macroscopically, that is, ignoring the scanning in the direction Cid, the beam is scanned approximately from the center side of the rotor core 1 toward the outer side in the direction Did.

In a bridge portion 4 on the inner side (also referred to as an inner bridge) according to the present embodiment, the beam is scanned in a direction orthogonal to the direction Did while being scanned at high speed in the direction Did. That is, the beam in the inner bridge is macroscopically scanned in a direction orthogonal to the direction Did.

The macroscopic scanning direction of the beam is a direction approximately parallel to the direction from a magnet hole 3 toward the outer peripheral surface, or a direction approximately parallel to the direction from one magnet hole 3 of two adjacent magnet holes 3 to the other magnet hole 3.

The start regions according to the present embodiment each refer to a region on the side indicated as "Start" in FIG. 5, and the end regions according to the present embodiment each refer to a region on the side indicated as "End" in FIG. 5.

The start regions and the end regions are regions that are determined appropriately by experiments, numerical simulations using a computer, or the like in accordance with the shape, size, required magnetic specs, etc. of the electromagnetic steel sheets 2.

The postheat treatment step is a heat treatment step of cooling the regions, which have been heated in the melting modification step, while maintaining the cooling rate in the regions to be equal to or lower than a predetermined cooling rate. This will be more specifically described. In the preheat treatment step, the melting regions are heated to a predetermined temperature lower than the melting point of the electromagnetic steel sheets 2.

In the melting modification step, the sites irradiated with the beam have a temperature higher than the predetermined temperature. Then, the postheat treatment step suppresses rapid cooling of the regions which have been heated in the preheat treatment step and the melting modification step.

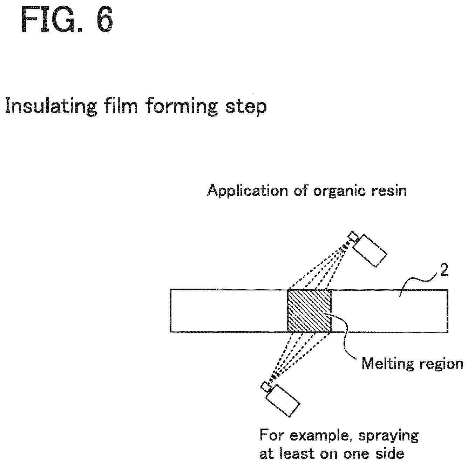

### <Insulating Film Forming Step (see FIG. 6)>

The insulating film according to the present embodiment is formed on at least a part of a bridge portion 4, that is, on the melting region. Specifically, after an organic resin is applied or sprayed onto the melting regions, the resin is heated at about 100C° to 400C°.

The insulating film is formed on at least one side (only one side in the present embodiment) of the sheet surfaces of each electromagnetic steel sheet 2. In other words, the insulating film is formed so that adjacent electromagnetic steel sheets 2 are in a state of being electrically insulated when a large number of electromagnetic steel sheets 2 are stacked.

### <Punching step>

Each electromagnetic steel sheet 2 that has undergone the modifying step is press-formed into a predetermined shape by punching with a press machine. In the punching step, a trimming step is also performed for removing at least a part of at least one region of a start region and an end region (at least a part of each of the start regions and the end regions in the present embodiment).

When the trimming step according to the present embodiment is carried out, therefore, at least a part of the start region on one side and the end region on the other side of each bridge portion 4 is removed, and at least the bridge portions 4 remain.

### <3. Features of Manufacturing Method According to Present Embodiment>

In the present embodiment, at least a part of a bridge portion 4 of each electromagnetic steel sheet 2 is modified, and the modified electromagnetic steel sheets 2 are stacked. This allows the bridge portions 4 of the rotor core 1 according to the present embodiment to have a lower magnetic permeability than that of other sites, and it is therefore possible to prevent some of the magnetic field lines from being short-circuited so as to draw a closed curve in the rotor core 1. Accordingly, a decrease in the efficiency of an interior permanent magnet (IPM) type rotating electric machine can be suppressed.

In the modifying step, the electromagnetic steel sheets 2 are heated and melted, so the electrical insulation of the melted sites is destroyed. In the present embodiment, however, an electrical insulating film is formed on at least a part of a bridge portion 4 that has undergone the modifying step, and it is therefore possible to ensure the electrical insulation between adjacent electromagnetic steel sheets 2.

In the start regions, heat is not sufficiently transmitted, so there is a possibility that the melting portions, which are the targets of modification, cannot be sufficiently melted. If the melting is insufficient, it is difficult for the nonmagnetic modifying additive element, which is a modifier, to be sufficiently contained in the electromagnetic steel sheets 2, and the nonmagnetic modification failure is therefore likely to occur.

The end regions solidify in the last instance, so defects such as cracks and voids due to shrinkage cavities are likely to occur. This may cause deterioration of the strength in the end regions. In other words, the start regions and the end regions are sites that are highly likely to be inappropriate sites for the rotor core 1.

To overcome such problems, in the present embodiment, the trimming step is provided to remove at least a part of each of the start regions and the end regions, and therefore the sites in which the nonmagnetic modification failure is likely to occur and the sites in which the deterioration of strength may occur are removed from the electromagnetic steel sheets 2.

In the present embodiment, the beam is scanned in the direction Did while oscillating at high speed in the direction Cid. In other words, the beam is scanned in the macroscopic beam scanning direction while oscillating at high speed in a direction orthogonal to the scanning direction.

Therefore, in the electromagnetic steel sheets 2 manufactured by the manufacturing method according to the present embodiment, the occurrence of problems such as a magnetic short-circuit phenomenon due to the nonmagnetic modification failure and insufficient strength of the electromagnetic steel sheets 2 is suppressed. Thus, the rotor core 1 according to the present embodiment can respond to high-speed rotation.

In the present embodiment, the modifying step is carried out after predetermined regions including the melting regions are heated to a predetermined temperature lower than the melting point of the electromagnetic steel sheets 2 (preheat treatment step). Therefore, the occurrence of cracks can be suppressed as compared with the case in which only the melting regions are heated during the modifying step.

In the present embodiment, the regions which have been heated in the melting modification step are cooled while maintaining the cooling rate in the regions to be equal to or lower than a predetermined cooling rate (postheat treatment step). This can suppress rapid cooling of the heated regions, and the occurrence of cracks due to rapid contraction of the melting regions can be suppressed.

### (Second Embodiment)

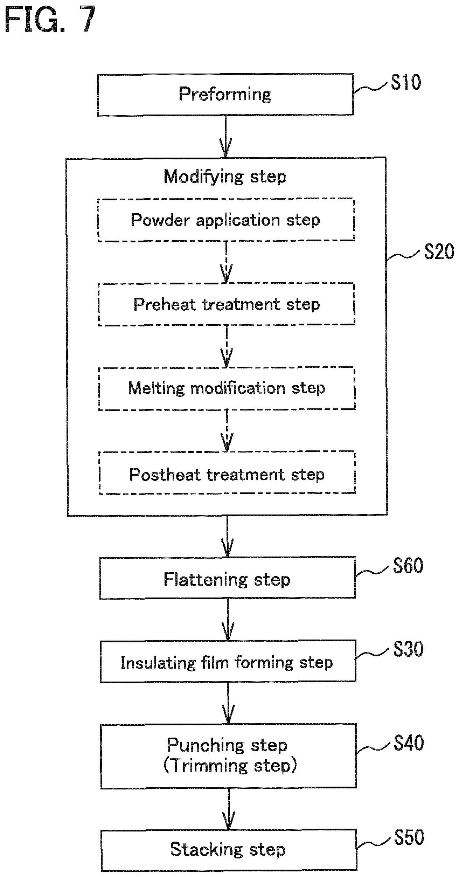

In the manufacturing method according to the present embodiment, as illustrated in FIG. 7, a flattening step (S60) is carried out after the modifying step is completed and before the stacking step is performed. The flattening step is a pressing step in which the thickness dimensions of predetermined regions including the bridge portions 4 of the electromagnetic steel sheets 2 that have undergone the modifying step are reduced to the thickness dimensions of other sites or less.

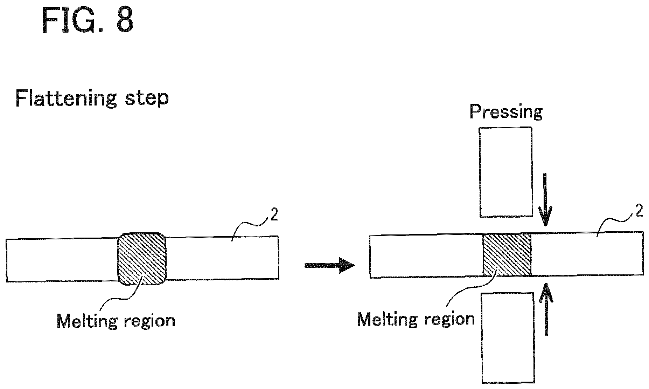

This will be more specifically described. As illustrated in FIG. 8, a bridge portion 4 that has undergone the modifying step, that is, the melting region, has a larger thickness dimension than those of other sites and is in a protruded shape. In the flattening step, therefore, that region is pressed with a press machine to flatten the protruded shape. This allows the large number of electromagnetic steel sheets 2 to be stacked appropriately in the thickness direction when they are stacked.

The same configurations and the like as in the above-described embodiment are denoted with the same reference numerals as in the above-described embodiment. In the present embodiment, therefore, redundant description is omitted.

### (Third Embodiment)

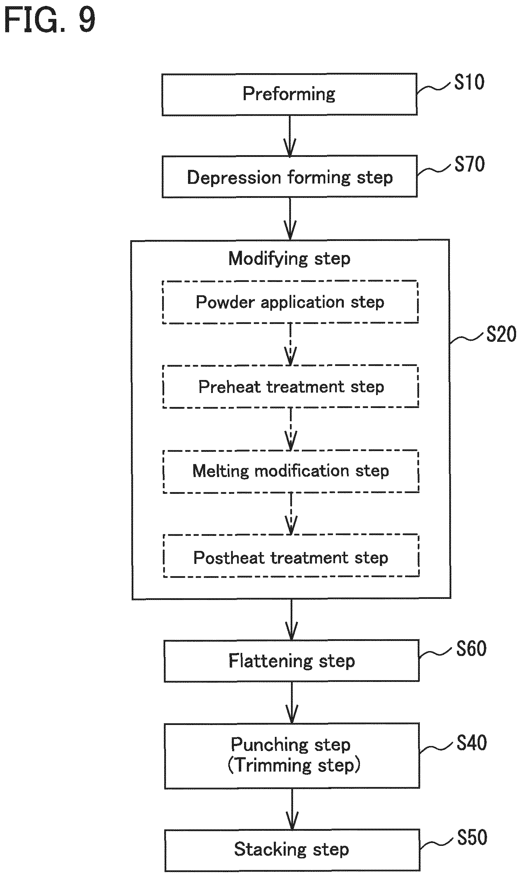

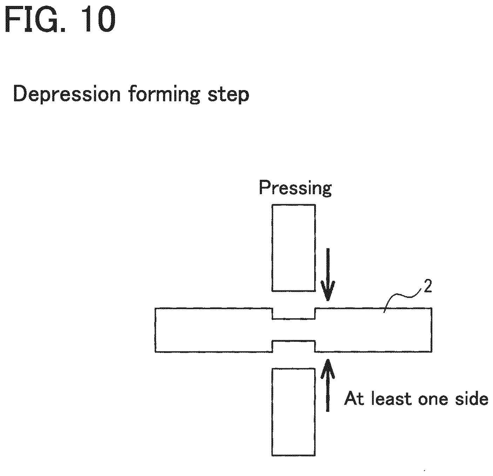

In the manufacturing method according to the present embodiment, as illustrated in FIG. 9, a depression forming step (S70) is carried out before the modifying step is performed. As illustrated in FIG. 10, the depression forming step is a step in which at least a part of a bridge portion 4 or a predetermined region (melting region in the present embodiment) including the bridge portion 4 is depressed in the thickness direction by using a press machine.

Then, in the present embodiment, a modifier is applied to the depressed site to modify the site. The site to be depressed is at least one side of the one side and the other side in the thickness direction (in FIG. 10, both sides are depressed).

In the present embodiment, therefore, the melting region can be maintained in a depressed state even after the modifying step is completed. Thus, even if the electrical insulation in the melting regions is destroyed, it may be possible to ensure the electrical insulation between adjacent electromagnetic steel sheets 2. Accordingly, it may be possible to omit the insulating film forming step.

In FIG. 9, the insulating film forming step is omitted for the above reasons, but the insulating film forming step may be performed in the present embodiment. The same configurations and the like as in the above-described embodiments are denoted with the same reference numerals as in the above-described embodiments. In the present embodiment, therefore, redundant description is omitted.

When one side and the other side in the thickness direction are depressed, even after the modifying step is completed, the one side and the other side in the thickness direction of the melting regions can be maintained in a depressed state. In this case, the flattening can be omitted.

### (Fourth Embodiment)

The present embodiment represents an example relating to a configuration for ensuring electrical insulation between adjacent electromagnetic steel sheets 2. That is, when one electromagnetic steel sheet 2 of two adjacent stacked electromagnetic steel sheets 2 is a first electromagnetic steel sheet 2, the other electromagnetic steel sheet 2 is a second electromagnetic steel sheet 2, a bridge portion 4 of the first electromagnetic steel sheet 2 is a first bridge portion, a bridge portion 4 of the second electromagnetic steel sheet 2 is a second bridge portion, and a virtual plane orthogonal to the stack direction is a projection plane, the stacking step according to the present embodiment includes stacking the electromagnetic steel sheets 2 so that the first bridge portion projected onto the projection plane is displaced from the second bridge portion projected onto the projection plane.

This allows the adjacent modified sites, in particular, adjacent sites with broken electrical insulation, to be prevented from coming into contact with each other; therefore, even when the electrical insulation is broken by the modification, it may be possible to ensure the electrical insulation between the adjacent electromagnetic steel sheets 2. Accordingly, it may be possible to omit the insulating film forming step.

### (Fifth Embodiment)

As described above, a part of a bridge portion 4 composed of a silicon steel sheet is provided with a modified portion that is modified by being heated together with a modifier (e.g., nickel or chromium). The modified portion is formed with an austenite phase, and its magnetic permeability is lower than that of other sites.

Here, in the rotor core 1 which rotates at high speed, a large tensile stress is generated in the bridge portions 4 (see FIG. 1) due to centrifugal force, and the bridge portions therefore require higher tensile strength. If a part of a bridge portion is modified by laser melting to increase the strength, the modified portion may become stronger, but the bridge portion is configured such that a weak silicon steel sheet, a strong modified portion, and a weak silicon steel sheet are arranged in this order. Thus, it has been believed that partial modification of the bridge portion would not be effective in improving the tensile strength because the relatively weak silicon steel sheet breaks eventually when pulled in the arrangement direction.

Fortunately, however, the present inventor has found that the tensile strength of the entire bridge portion 4 including the modified portion is improved by pressing at least the modified portion, that is, performing the flattening step of applying mechanical pressure to the modified portion, after the modifying step.

In other words, the inventor has found that "a silicon steel sheet manufactured by a manufacturing method including the manufacturing method according to the second embodiment is a high-strength steel sheet with improved tensile strength as compared with a normal silicon steel sheet to which the manufacturing method is not applied."

That is, when at least a part of a bridge portion 4 of each electromagnetic steel sheet 2 composed of a silicon steel sheet is provided with a modified portion that satisfies the following requirement, the tensile strength is improved as compared with that of a normal silicon steel sheet.

The requirement is that the modified portion is "a modified portion obtained through irradiating the portion with a laser beam or electron beam to melt and modify the portion together with a modifying metal or modifying alloy and then pressing the portion." In a preferred configuration, at least a part of the modified portion may reach from one surface to the other surface of the silicon steel sheet in its thickness direction.

Here, when the tensile strength of an inner bridge (rib) 4 of FIG. 2 was measured, the tensile strength was 874 MPa in the case of only the silicon steel sheet without a modified portion, but the tensile strength in this example was significantly improved to 1033 MPa.

### (Other Embodiments)

In the above-described embodiments, the melting regions are irradiated with the beam to heat and melt the melting regions. However, the present disclosure is not limited to this. That is, in the present disclosure, for example, the regions may be heated and melted for modification by electrical heating.

In the insulating film forming step according to the above-described embodiments, the insulating film is formed on at least a part of a bridge portion 4, that is, the melting region. However, the present disclosure is not limited to this. That is, the present disclosure may be directed, for example, to a case in which an insulating film is formed on the entire electromagnetic steel sheet 2 in the insulating film forming step or a case in which an insulating film is formed only on a region of each melting region excluding the start region and the end region.

In the trimming step according to the above-described embodiments, the start regions and the end regions are removed. However, the present disclosure is not limited to this. That is, the present disclosure may be directed, for example, to a case in which only the start regions are removed in the trimming step or a case in which only the end regions are removed in the trimming step.

The trimming step according to the above-described embodiments is executed by punching with a press machine. However, the present disclosure is not limited to this. That is, in the present disclosure, for example, the trimming step may be executed by cutting.

The above-described embodiments have the preheat treatment step and the postheat treatment step. However, the present disclosure is not limited to this. That is, the present disclosure may be directed, for example, to a manufacturing method in which at least one of the preheat treatment step and the postheat treatment step is omitted.

The preheat treatment step and the postheat treatment step according to the above-described embodiments are measures for suppressing the occurrence of cracks. However, the present disclosure is not limited to this. That is, in the present disclosure, for example, a non-magnetizing heat treatment may be carried out together with the crack countermeasures by these heat treatments.

The beam scanning method is not limited to the above. That is, as illustrated in FIG. 5, for example, the disclosure in the outer bridge portions 4 (also referred to as the outer bridges) may be directed, for example, to a case in which the beam is scanned in the direction Cid while oscillating at high speed in the direction Did or a case in which the direction of macroscopic beam scanning is approximately from the outer side of the rotor core 1 toward the center outer side in the direction Did.

In the above-described first embodiment, the punching step (S40) is carried out after the insulating film forming step (S30) is performed. However, the present disclosure is not limited to this. That is, in the present disclosure, for example, the insulating film forming step (S30) may be carried out after the punching step (S40) is performed.

In the above-described first embodiment, the insulating film forming step (S30) is carried out after the modifying step (S20) is performed. However, the present disclosure is not limited to this. That is, in the disclosure, for example, a powder removal step of removing the residual modifier may be carried out before or after the postheat treatment step.

The modified portions according to the above-described embodiments have a configuration in which at least a part of a modified portion reaches from one surface to the other surface of the silicon steel sheet in its thickness direction. However, the present disclosure is not limited to this. That is, the present disclosure may be directed, for example, to a configuration in which the modified portion does not reach from one surface to the other surface of the silicon steel sheet in its thickness direction.

Further, the present disclosure is not limited to the above-described embodiments, provided that it conforms to the spirit of the disclosure described in the above-described embodiments. Possible configurations therefore include those in which at least two of the above-described embodiments are combined and those in which any one of the illustrated configurations or the configurations described with the reference numerals is omitted in the above-described embodiments.

## Claims

1. A method for manufacturing a rotor core in which electromagnetic steel sheets are stacked in a thickness direction and a permanent magnet is partially embedded, the method comprising:
a modifying step of melting at least a part of a bridge portion of each electromagnetic steel sheet together with a modifying metal or modifying alloy to make a magnetic permeability of the part lower than that of other sites; and
a stacking step of stacking the electromagnetic steel sheets that have undergone the modifying step.

2. The method for manufacturing a rotor core according to claim 1, comprising
a film forming step of forming an electrical insulating film on at least a part of the bridge portion, wherein the film forming step is executed after the modifying step is completed.

3. The method for manufacturing a rotor core according to claim 1, comprising
a depression forming step of depressing at least one side of the one side and another side in the thickness direction of at least a part of the bridge portion or of a predetermined region including the bridge portion.

4. The method for manufacturing a rotor core according to any one of claims 1 to 3, comprising
a flattening step of reducing a thickness dimension of the bridge portion to thickness dimensions of other sites or less in the electromagnetic steel sheets that have undergone the modifying step, wherein the flattening step is executed before the stacking step is performed.

5. The method for manufacturing a rotor core according to any one of claims 1 to 4,
wherein when at least a part of the bridge portion of each electromagnetic steel sheet is included in a melting region,
the modifying step includes irradiating the melting region with a laser beam or electron beam to melt the melting region,
wherein when a predetermined region including a site at which irradiation with the beam is started in the melting region is set as a start region, and a predetermined region including a site at which irradiation with the beam is completed in the melting region is set as an end region,
the method further comprises a trimming step of removing at least one region of the start region and the end region,
wherein the start region and the end region are sites located outside the bridge portion.

6. The method for manufacturing a rotor core according to claim 5, wherein the trimming step is performed by punching with a press machine.

7. A high-strength steel sheet comprising a modified portion provided as a part of a silicon steel sheet, wherein the modified portion is melted and modified together with a modifying metal or modifying alloy through irradiation with a laser beam or electron beam and then pressed.

8. The high-strength steel sheet according to claim 7, wherein at least a part of the modified portion reaches from one surface to another surface of the silicon steel sheet in its thickness direction.

9. A rotor core in which electromagnetic steel sheets made of the high-strength steel sheets according to claim 7 or 8 are stacked in a thickness direction and a permanent magnet is partially embedded,
wherein at least a part of a bridge portion of each electromagnetic steel sheet is composed of the modified portion.

10. A method for manufacturing a high-strength steel sheet, comprising:
irradiating a part of a silicon steel sheet with a laser beam or electron beam to melt and modify the part together with a modifying metal or modifying alloy to form a modified portion; and
then pressing the modified portion.

11. The method for manufacturing a high-strength steel sheet according to claim 10, wherein the modified portion reaches from one surface to another surface of the silicon steel sheet in its thickness direction.
